# EUROPEAN PATENT APPLICATION

(11) **EP 4 797 689 A1**
(43) Date of publication of application: **26.08.2026**
(21) Application number: 26158074.0
(22) Date of filing: 12.02.2026
(51) Int. Cl.: H04N 19/126, H04N 19/136, H04N 19/137, H04N 19/154, H04N 19/176

(54) **VIDEO ENCODING USING INFERENCE OF QUANTIZATION MATRIX**

(30) Priority: 19.02.2025 US 202519057743
(71) Applicant: Mellanox Technologies, Ltd., 2069200 Yokneam (IL)
(72) Inventor: ADATO, Mor, 2069200 Yokneam (IL); WIESEL, Yechiel, 2069200 Yokneam (IL); LEVI, Dotan David, 2069200 Yokneam (IL); PORAT, Dror, 2069200 Yokneam (IL)
(74) Representative: Mathys & Squire

(57) **Abstract**

Systems and methods disclosed herein may include or use a video encoder and an inference sub-system. The inference sub-system may infer a quantization matrix (QM) level from video or frame statistics within features of a media stream. The video encoder may use the QM level to apply a QM for the video encoder. The QM may be used in the video encoder for encoding the media stream.

## Description

### TECHNICAL FIELD

This disclosure generally relates to improving video encoding and, in at least one aspect, specifically relates to using machine learning for inference of quantization matrix in video encoding.

### BACKGROUND

Video encoding may include quantization matrices (QMs) used for coding efficiency, without compromising a video compression performance. Certain standards may define up to 16 sets of QMs. The QMs may be available for selection by specifying one of the QMs using a QM level as an input to a video encoder. A video encoder for video encoding may include the QMs but may not include a use of the QM level adapted to a media stream. Instead, a QM level may be adapted only to a quantization index or parameter (QP) of a frame in a media stream. Some applications may use a range of QM levels for all the frames of a media stream or for an entire video represented by the media stream. This use may not consider that video represented by a media stream may be diverse.

### SUMMARY

The invention is defined by the claims. In order to illustrate the invention, aspects and embodiments which may or may not fall within the scope of the claims are described herein.

Systems and methods disclosed herein may include or use a video encoder and an inference sub-system. The inference sub-system may infer a quantization matrix (QM) level from video or frame statistics within features of a media stream. The video encoder may use the QM level to apply a QM for the video encoder. The QM may be used in the video encoder for encoding the media stream.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF DRAWINGS

FIG. 1 is an illustration of an encoding system for using machine learning (ML) or deep learning (DL) with video or frame statistics for video encoding, in at least one embodiment;
FIG. 2 is an illustration of processing blocks within an encoding system for using ML or DL with video or frame statistics for video encoding, in at least one embodiment;
FIG. 3 is an illustration of aspects of using ML or DL with video or frame statistics for video encoding, in at least one embodiment;
FIG. 4 illustrates computer and processor aspects of a system for using ML or DL with video or frame statistics for video encoding, in at least one embodiment;
FIG. 5A illustrates a process flow for using ML or DL with video or frame statistics for video encoding, in at least one embodiment;
FIG. 5B illustrates another process flow using ML or DL with video or frame statistics for video encoding, in at least one embodiment; and
FIG. 6 illustrates a datacenter adapted for using ML or DL with video or frame statistics for video encoding.

### DETAILED DESCRIPTION

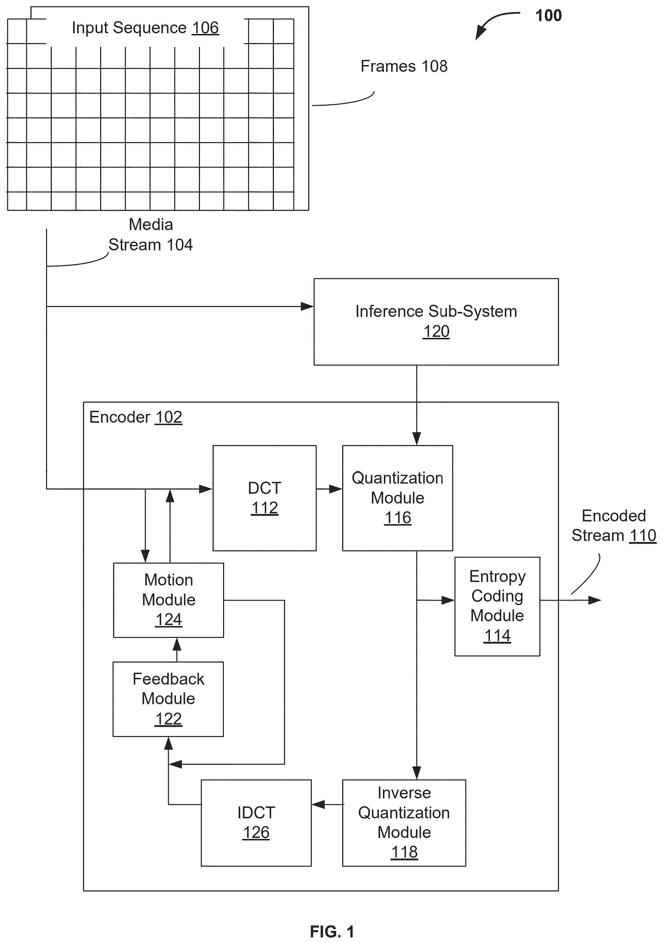

FIG. 1 is an illustration of an encoding system 100 for using machine learning (ML) or deep learning (DL) with video or frame statistics for video encoding, in at least one embodiment. Instead of performing ML or DL with respect to contents of videos or frames within the videos, the encoding system 100 may use an ML or DL model with video or frame statistics from features in a media stream for video encoding. In an example, a two-step approach may be used. In a first step of the two-step approach, features may be extracted from a media stream. Frame statistics may be obtained from the features as part of the first step. An encoding system 100 may be associated with an inference sub-system 120, which may be trained or which may include training routines associated with video or frame statistics of a media stream. For instance, the inference sub-system or its training routines may be trained using video or frame statistics of a media stream. The video or frame statistics may be from features associated with parts of a media stream subject to video encoding or associated with different media streams previously used with or intended to be used with the encoding system 100. In a second step, an inference of a QM level may be obtained using the inferencing sub-system performing inference on a media stream subject to video encoding. The QM level may be used to predict a QM for the media stream or a portion thereof.

The features extracted may include one or more of motion characteristics, spatial and temporal complexity, noise patterns, content-based features, content metadata, genre of the media stream, data associated with sources of the media stream, user-specified preferences, frame rates, frame resolution, bitrates, or quality levels. These features may also be used for training a feature extractor module associated with the inferencing sub-system. The video or frame statistics may include one or more of statistical distribution measures, spatial frequency or rates, or texture statistics, which may be obtained from the features. For example, the features may indicate correlations or relationships between one or more frames. Only the statistics associated with those frames may be used with the ML or DL models for training and for inference in the inferencing sub-system. The inferencing sub-system or its training routines may use supervised ML regression or other ML prediction of a QM level or index. This may include both ML classification and ML regression or may include other ML or DL models (such as neural networks, Bayesian networks, random forest models, and support vector machines (SVMs)). Once trained, the inferencing sub-system or its training routines may be used to predict QM levels for the video or frame statistics of a media stream that is subject to video encoding. The encoding system 100 makes it possible to perform inner-video compression (such as compression directed to content within a media stream), without performing ML or DL on substantial parts of the video or frames of a media stream. In one example, ML or DL need may be performed for extraction of features only on key-frames or for every predetermined number of frames, but not on substantial parts of the video or frames of a media stream.

In one example, features of a video or frame of a media stream may include characteristics or properties extracted from a frame and that describe content of the frame. In one example, features of a frame may include color features, such as histograms, moments, and dominance with respect to a color space. The features may include textural features, such as Local Binary Patterns (LBPs), Gabor filters, or Haralick texture features. The features may include shape features, including Hu moments or Fourier descriptors. The features may include spatial features that may be layouts of objects within a frame. The features may include semantic features that may be indicative of object similarity. The features may include scene classification features that may be indicative of scene similarity. The features may include action features that may be indicative of action similarity (such as human actions of talking, walking, emotions, and the like). The features may include textual features that may be text content extracted from subtitles, captions, or speech-to-text transcriptions from a video. The features may also include order statistics derived from encoder look-ahead processes, metrics such as estimated frame complexity, intra sum of absolute transformed differences (SATD), inter SATD, average motion vectors (x, y), and inter/intra blocks ratios. All such features may be broadly categorized as motion characteristics, spatial and temporal complexity, noise patterns, content-based features, content metadata, genre of the media stream, data associated with sources of the media stream, user-specified preferences, frame rates, frame resolution, bitrates, or quality levels.

Differently, statistics of a video or frame of a media stream may include quantitative measurements that measure from pixel values within a frame and that can characterize a distribution or properties of pixel intensities, in one example. Statistics of a frame may include pixel intensity distribution, such as a histogram of pixel values. The statistics may include statistical distribution measures, including a mean, variance, skewness, or kurtosis of a frame. The statistics may include spatial frequency or rates with respect to changes to pixel intensities. The statistics may include texture statistics pertaining to texture patterns, such as entropy and contrast with respect to textures within a frame. All such statistics may be broadly categorized as statistical distribution measures, spatial frequency or rates, or texture statistics. A QM may be evaluated by metrics within the encoder, including VMAF (Video Multi-Method Assessment Fusion), SSIM (Structural Similarity Index), Multiscale SSIM (MS-SSIM), PSNR (Peak Signal-to-Noise Ratio), or a weighted average or rate reduction derived from VMAF, SSIM, MS-SSIM, or PSNR. The weighted average or rate reduction may be additionally obtained form other quality metrics described herein. The evaluation may be used to finetune the ML or DL or the QM level provided from an ML or DL model of the inference sub-system.

An encoding system 100 may include an encoder 102, such as a video encoder, capable of performing encoding of media stream 104. The encoding may include compression. In one example, a media stream 104 may include an input sequence 106 of individual frames 108 of a video. The individual frames 108 may include blocks or macro-blocks (MBs) of content. The encoder 102 is able to encode the media stream 104 to provide an encoded stream 110. In one example, the encoder 102 may be based in part on one of an H.264 standard, an MPEG2 standard, an AVC standard, an HEVC standard, a VP9 standard, an AV1 standard, or a VVC standard. However, the encoder 102 may be used with any encoder standard that allows QM level input and that provides different QMs for encoding the media stream 104.

The encoder 102 may be based in part on the H.264 standard, which uses Discrete Cosine Transform (DCT) 112 and entropy coding as part of video encoding performed for a media stream 104. The DCT 112 may use 8x8 blocks within individual frames 108 of an input sequence 106 in the media stream 104. The DCT 112 may be applied to the blocks to provide a matrix of DCT coefficients. The matrix of DCT coefficients may include low-frequency coefficients and high-frequency coefficients, representing different levels of detail within content of the media stream 104.

The DCT 112 may feed a quantization module 116. The quantization module 116 may address a compression ratio and quality intended for encoded stream 110. In one example, the quantization module 116 may reduce the DCT coefficients and may reduce bit representation associated with the DCT coefficients. The quantization module 116 may include a quantization step size, which may be associated with a desired bitrate for the compression ratio. Individual ones of the DCT coefficients may be divided by quantization step size to provide an integer representative of the reduction performed from the DCT coefficients. A larger quantization step size may cause aggressive quantization and a lower bitrate, while a smaller quantization step size may cause lesser quantization and a higher bitrate. The lower bitrate may reflect lower quality, while the higher bitrate may reflect higher quality for the encoded stream 110.

A QM may be used to perform scaling of the quantization step size for different frequency components of a media stream 104. This QM allows for aggressive quantization of high-frequency DCT coefficients, which may be perceptually less significant, while preserving the low-frequency DCT coefficients. The QM may include a matrix of values and may be associated with individual blocks or MBs of individual frames 108. The QM may be specific with respect to individual frames 108 of a media stream 104, relative to the quantization step size, which may be a global factor for an overall quantization level. In one example, a QM can be a local factor to adjust a quantization for different DCT coefficients within different blocks or MBs or individual ones of the individual frames 108. A QM used with a quantization step size may provide a final quantized value of a DCT coefficient by allowing division of DCT coefficients by a product of the quantization step size and a corresponding element from a matrix associated with the QM.

An entropy coding module 114 may perform entropy coding for the final quantized values of the DCT coefficients. The entropy coding module 114 may lead to further reduction in size (such as compression) of the media stream 104 to provide the encoded stream 110. A feedback loop, supported by one or more of an inverse quantization module 118, an inverse DCT 126 (IDCT) module, a feedback module 122, and a motion module 124 may provide further features for encoding a media stream 104. In one instance, the feedback loop may be used to provide Rate-Distortion Optimization (RDO) during encoding of the media stream 104. The RDO may use an intermediate reconstruction process for the final quantized values.

For instance, after the final quantized values are obtained for at least one frame, representing part of a compression and/or encoding of a frame using DCT and quantization, the intermediate reconstruction may be formed using the inverse quantization module 118 and the IDCT 126. The inverse quantization module may reverse a quantization process by multiplication of each final quantized value by a corresponding inverse quantization step size to undo losses of the quantization module 116. In effect, a restoration of an original DCT coefficient may be attempted. The IDCT 126 performs conversion from a frequency domain to a spatial domain for the restored DCT coefficients. The conversion may provide intermediate reconstructions of original pixel values: The IDCT 126 provides intermediate reconstruction of original pixel values of the video frame, which may not be perfect and may include losses.

The RDO may be in reference to an ability in an encoder 102 to encode one or more of the individual frames 108 with different final quantization values using Quantization Parameters (QPs). An encoder 102 may be able to encode a same one of the individual frames 108 multiple times and may be able to use different quantization step sizes as part of the RDO process. The feedback loop may be used to perform decoding and evaluation using the inverse quantization module 118 and the IDCT 126 to provide reconstructed frames for comparison to original frames. The comparison may be to calculate a distortion metric associated with individual ones of the individual frames 108. The distortion metric may include VMAF, SSIM, MS-SSIM, and PSNR.

RDO may specifically allow a bitrate to be determined for each encoded frame at the quantization module 116 and may allow generation of a rate-distortion curve (or associated values). An encoder 102 may be able to use the associated values, in an optimal quantization selection process, to select QPs that may result in a lowest distortion for a given bitrate or a lowest bitrate for a given distortion level. The intermediate reconstruction may be performed during the RDO process to obtain a reconstructed frame. Distortion measurement may be performed for each reconstructed frame, compared to an original frame. The RDO, in part, may represent use of feedback (that may be in addition to the feedback loop) in an encoder 102 to adjust quality of an encoded stream 110.

A feedback module 122 of an encoder 102 may include a loop filter and a frame buffer. A loop filter may perform post-processing filter with respect to the intermediate reconstruction of at least one of the individual frames 108. The loop filter may be applied to a reconstructed frame to reduce visual artifacts. The visual artifacts may include blocking and ringing. The visual artifacts may be from the encoding processes, including those from the DCT 112 and the quantization module 116. The loop filter may analyze a reconstructed frame and may use its neighboring frames to determine artifacts. The loop filter may be able to apply smoothening to reduce visibility of one or more of the artifacts. There may be different loop filters, including a deblocking filter to address blocking artifacts. The blocking artifacts may include visible sharp edges between blocks or MB of one or more of the individual frames 108. An in-loop deblocking filter may perform filtering operations on a current frame, as well as on reference frames, to improve a deblocking performance within an input sequence 106. A sample adaptive offset (SAO) filter may reduce ringing artifacts and may address overall image quality by adjusting pixel values based on local characteristics of one or more individual frames 108.

A frame buffer of the feedback module 122 may provide memory to store frames during an encoding process but may also store raw video frames, encoded frames, and reconstructed frames. The reconstructed frames may be obtained after the intermediate reconstruction and may be accessed for the loop filter and for motion-related operations by a motion module 124. A motion module 124 may enable a motion estimation operation and a motion compensation operation. A motion estimation operation may include a search performed by the motion module 124 for a matching block (or best matching block) in a reference frame for a given block of a current one of the individual frames 108. A Full Search Block Matching (FSBMA), a Three-Step Search (TSS), a Diamond Search (DS), or other suitable search may be applied. A motion compensation operation may use information, such as a motion vector, from the motion estimation operation, to predict a current block using a corresponding block in the reference frame. The motion compensation operation may represent a prediction for a current block and its outcome may allow a subtraction between a current block and an original current block. The subtraction may be to generate a residual block. The residual block may represent only motion differences between blocks of one or more individual frames 108 and may represent a substantial reduction in processing needed for encoding one or more individual frames 108.

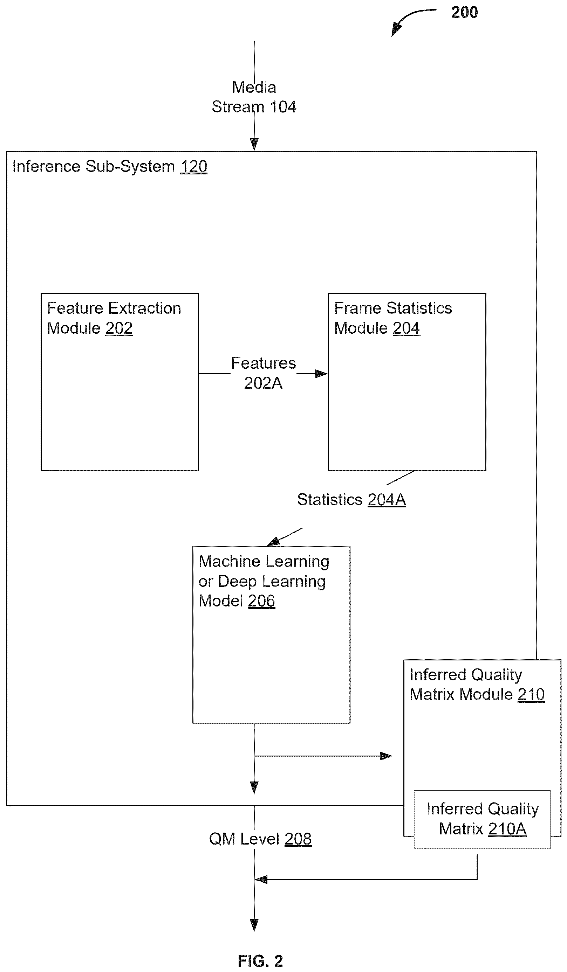

The inference sub-system 120 may receive the media stream 104 or portions thereof, including limited ones of the individual frames 108 of a media stream 104. The limited ones of the individual frames 108 may represent part of an input sequence 106 of a media stream 104. The inference sub-system 120 may dynamically adjust or may cause a dynamic adjustment of a QM for each of one or more individual frames 108 or an input sequence 106 of the one or more individual frames 108. The adjustment may be based on content features and real-time encoding conditions, only as represented by statistics of the one or more individual frames 108 or an input sequence 106 of the one or more individual frames 108. In one example, which is detailed further in one or more of FIGS. 2-6, the inference sub-system may be able to extract features from the individual frames 108, may be able to determine statistics for the individual frames 108 or the underlying video, and may be able to apply an ML or DL model which is trained with the statistics to apply an appropriate QM in the quantization module 116. Application of a QM may include at least provision of a QM by a prediction from the ML or DL model. For instance, an index or level pointing to a specific QM from a set of predefined QMs may be an outcome from the ML or DL model using features from the individual frames 108. While certain encoding, such as AV1, may reference to the QM by levels, other standards might use an index.

FIG. 2 is an illustration of processing blocks 200 within an encoding system 100 for using ML or DL with video or frame statistics for video encoding, in at least one embodiment. An inference sub-system 120 may include a feature extraction module 202. The feature extraction module 202 may be configured to extract features from the individual frames 108 of a media stream 104. For example, the feature extraction module 202 may include filters (including classifiers) and pattern extractors (including discriminators) to extract characteristics or properties from one or more of the individual frames 108. In one example, the filters, pattern extractors, or discriminators may extract color features, textural features, shape features, spatial features, semantic features, classification features, action features, and textual features of one or more of the individual frames 108.

The processing blocks 200 illustrate that the inference sub-system 120 may include a frame statistics module 204. The frame statistics module 204 may use the features 202A from the feature extraction module 202 to provide statistics 204A that may be video or frame statistics for one or more individual frames 108. The statistics 204A may include statistical distribution measures, spatial frequency or rates, and texture statistics for those frames indicated as corrected by one or more of the features 202A. In one example, one or more individual frames 108 may share one or more features, including motion characteristics, spatial and temporal complexity, noise patterns, content-based features, content metadata, genre of the media stream, data associated with sources of the media stream, user-specified preferences, frame rates, frame resolution, bitrates, or quality levels. The statistics 204A obtained from one or more individual frames 108 that share features may be provided to an ML or DL model, which may be an individual ML or DL model or may include individual training routines.

In one example, the ML or DL model or the training routines may be trained for classification or prediction associated with different statistics. For instance, the ML or DL model may be trained for statistical distribution measures, spatial frequency or rates, or texture statistics. In another example, the training routines may be individually trained for statistical distribution measures, spatial frequency or rates, or texture statistics frame. The ML or DL model and the training routines may be associated with individual QMs or individual QM levels associated with individual QMs. This allows the inference sub-system 120 to indicate a QM to be used to the encoder 102 by a QM level 208 provided to the encoder 102.

In one example, a frame or input sequence of frames may be associated to a QM by the QM level 208 provided by the inference sub-system 120. In another example, inferred quality matrices 210A may be used, when necessary, as part of a QM level 208. For instance, individual ones of the inferred quality matrices 210A may be stored or adjusted in an independent or associated component, such as an inferred quality matrix module 210, of the inference sub-system 120. In one example, a quality matrix can adjust one or more values of a QM of an encoder 102, while a QM level 208 may allow application of a specific one of the QMs in an encoder 102. A QM level 208 may be used within a quantization module 116 to encode each individual frame 108 or an input sequence 106 of one or more individual frames 108. In one example, the QM level 208 allows application or adjustment of a QM. When provided as an individual adjusted and inferred quality matrix 210A, the QM level can cause adjustment to a QM. Separately, the QM level may be used with or in the form of QPs to allow adjustment to a QM. The QPs may represent an index to apply or adjust a QM. The application of a QM to a media stream may include selection of a QM, adjustment of a QM, or provision of a QM (which may include an adjusted QM provided via a QM level) for a media stream. Additionally, because the features 202A underlie the statistics 204A used in an ML or DL model 206 or in the training routines, encoding-related parameters, such as frequency domain characteristics, bitrate limitations, and other encoder settings may also be applicable to influence the QM used with a media stream.

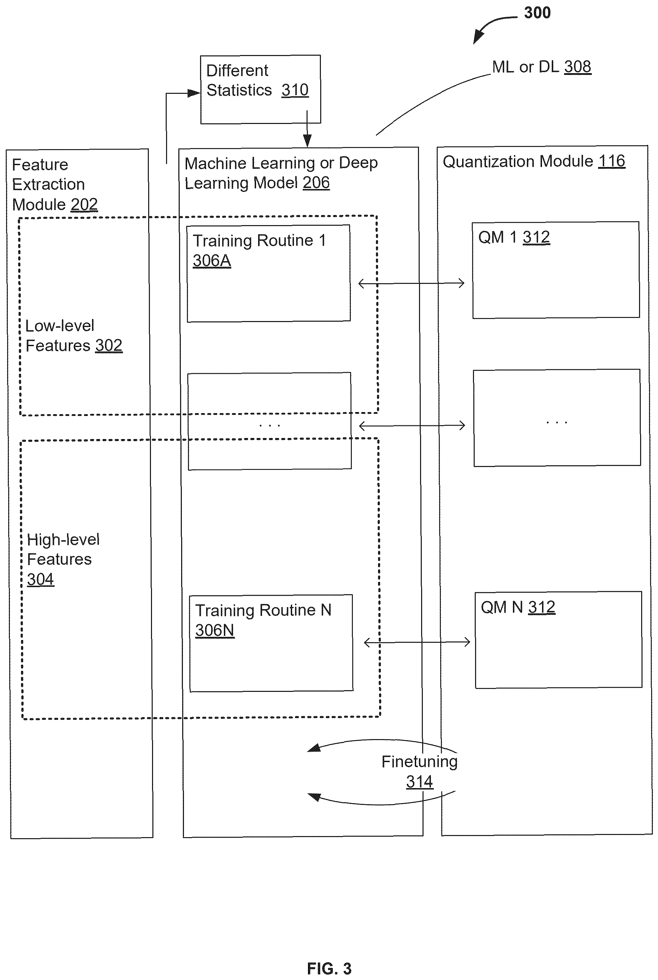

FIG. 3 is an illustration of aspects 300 of using ML or DL with video or frame statistics for video encoding, in at least one embodiment. Features used in the feature extraction module 202 may be categorized as low-level features 302 or high-level features 304. In one example, the features of the low-level features 302 may include those features extracted from raw pixel data of one or more individual frames 108. Features of the low-level features 302 may provide basic representation of visual and temporal information in an input sequence 106. For instance, spatial and temporal features, including color, texture, shape, motion, and temporal textures may be features of the low-level features 302. Features of a high-level features 304 may be abstract or semantic relative to features of the low-level features 302. The high-level features 304 may include semantic features, or textual features.

The encoding system 100 enables features 202A to be extracted from an input sequence 106 of the media stream using the feature extraction module 202. The input sequence 106 may be buffered over the different level features, including the low-level features 302 and the high-level features 304, which are associated with the illustrated features 202A from the features extraction module 202. The inference sub-system 120, using its ML or DL model 206, may be configured for different ML or DL 308. The different ML or DL 308 may be different supervised learning, for instance. The different ML or DL 308 may use different statistics 310 associated with the different levels of features 302, 304 and with individual ones of the QMs 1-N 312 of the quantization module 116. The different statistics 310 may also be from portions of a media stream 104 subject to video encoding or may be from different media streams previously used with or intended to be used with the encoding system 100. In one example, the high-level features 304 may be those features extracted using ML or ML/DL algorithms, such as classification, object detection, or segmentation. For example, determining a genre of a media stream (such as gaming, screen content, natural footage, and the like may involve high-level features). In another example, low-level features 302 may be those features extracted or derived directly from the frames, by applying filters, or from the encoder statistics (such as complexity and motion vectors).

An inference sub-system 120 may be configured with individual training routines 306A-306N. The individual training routines 306A-306N may be assigned for individual ones of the QMs 1-N 312 available in the encoder 102. For instance, once trained and based in part on statistics provided, an inference may be made by the inference sub-system 120 that the statistics apply for a specific one of the QMs 1-N 312. The inference sub-system 120 can cause a specific one of the QMs 1-N 312 to be applied for an input sequence 106 of a media stream 104. In one example, an ML or DL model, which may include the different training routines 306A-306N, may be trained with different QM levels (or QMs) and with different statistics 204A. Once trained, the inference sub-system 120 may infer individual QM levels 208 for individual ones of the QMs 1-N 312 available in the video encoder. Individual ones of the different training routines 306A-306N may be based on supervised ML regression. The supervised ML regression may be used for performing the inference for the QM level 208 for individual frames 108 of an input sequence 106 of the media stream 104.

An ML or DL model 206 of the inference sub-system 120 or the QM level 208 may be adjusted using finetuning 314. The finetuning 314 may be based in part on evaluation of the QM used with at least one frame of the media stream 104. In one example, the evaluation for finetuning 314 of an ML or DL model 206 may be based in part on VMAF, SSIM, MS-SSIM, PSNR, or weighted average or rate reduction derived from VMAF, SSIM, MS-SSIM, PSNR, or other quality metrics described throughout herein. The evaluation may use, in part, the distortion metric of an RDO process of the encoder 102 as a basis for finetuning 314 the ML or DL model 206. In one example, when the encoder 102 is optimized for an alternative RDO metric, such as X-PSNR, this metric may also be utilized in the training or fine-tuning of the ML or DL model 206. For instance, the ML or DL model's fine-tuning process may optimize a target metric, which may be a single metric (such as VMAF BD-rate) or which may be a composite metric (such as a weighted average of VMAF BD-rate and SSIM BD-rate).

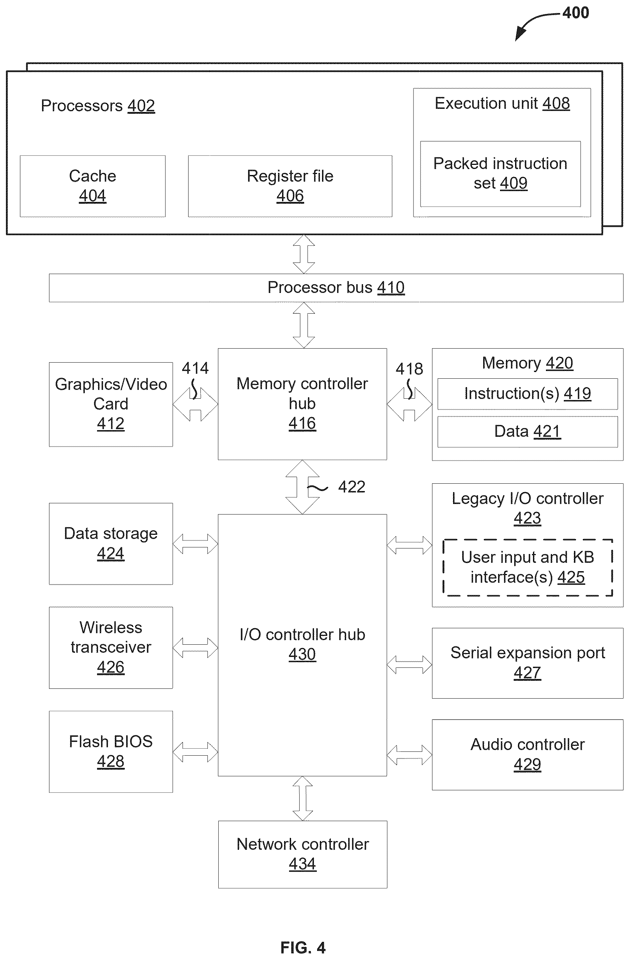

FIG. 4 illustrates computer and processor aspects 400 of a system for using ML or DL with video or frame statistics for video encoding, in at least one embodiment. For example, each of the illustrated processors 402 may include one or more processing or execution units 408 that can perform any or all aspects of the encoding system 100 for using ML or DL with video or frame statistics for video encoding. The encoding system 100 may include capability to receive external instructions to allow changes to the ML or DL model 206.

The processing or execution units 408 may include multiple circuits to support the aspects described herein for one or more of the encoder 102 or inference sub-system 120. In at least one embodiment, the processors 402 may include one or more of CPUs, GPUs, or DPUs that may be associated with a multi-tenant environment to perform one or more of the encoder 102 or inference sub-system 120. Further, at least the GPUs may be in distinct graphics/video cards 412, relative to a DPU (represented by a network controller 434) and a CPU represented by the processors 402 illustrated in FIG. 4. Therefore, even though described in the singular, the graphics/video card 412 may include multiple cards and may include multiple GPUs on each card.

The computer and processor aspects 400 may be performed by one or more processors 402 that include a system-on-a-chip (SOC) or some combination thereof formed with a processor that may include execution units to execute an instruction, according to at least one embodiment. In at least one embodiment, the computer and processor aspects 400 may include, without limitation, a component, such as a processor 402 to employ execution units 408 including logic to perform algorithms for process data, in accordance with present disclosure, such as in embodiment described herein. In at least one embodiment, the computer and processor aspects 400 may include processors, such as PENTIUM^{®} Processor family, Xeon^{™}, Itanium^{®}, XScale^{™} and/or StrongARM^{™}, Intel^{®} Core^{™}, or Intel^{®} Nervana^{™} microprocessors available from Intel Corporation of Santa Clara, California, although other systems (including PCs having other microprocessors, engineering workstations, set-top boxes and like) may also be used. In at least one embodiment, the computer and processor aspects 400 may execute a version of WINDOWS operating system available from Microsoft Corporation of Redmond, Wash., although other operating systems (UNIX and Linux, for example), embedded software, and/or graphical user interfaces, may also be used.

Embodiments may be used in other devices such as handheld devices and embedded applications. Some examples of handheld devices include cellular phones, Internet Protocol devices, digital cameras, personal digital assistants ("PDAs"), and handheld PCs. In at least one embodiment, embedded applications may include a microcontroller, a digital signal processor ("DSP"), system on a chip, network computers ("NetPCs"), set-top boxes, network hubs, wide area network ("WAN") switches, or any other system that may perform one or more instructions in accordance with at least one embodiment.

In at least one embodiment, the computer and processor aspects 400 may include, without limitation, a processor 402 that may include, without limitation, one or more execution units 408 to perform aspects according to techniques described with respect to at least one or more of FIGS. 1-3 and 5A-6 herein. In at least one embodiment, the computer and processor aspects 400 is a single processor desktop or server system, but in another embodiment, the computer and processor aspects 400 may be a multiprocessor system.

In at least one embodiment, the processor 402 may include, without limitation, a complex instruction set computer ("CISC") microprocessor, a reduced instruction set computing ("RISC") microprocessor, a very long instruction word ("VLIW") microprocessor, a processor implementing a combination of instruction sets, or any other processor device, such as a digital signal processor, for example. In at least one embodiment, a processor 402 may be coupled to a processor bus 410 that may transmit data signals between processors 402 and other components in computer and processor aspects 400.

In at least one embodiment, a processor 402 may include, without limitation, a Level 1 ("L1") internal cache memory ("cache") 404. In at least one embodiment, a processor 402 may have a single internal cache or multiple levels of internal cache. In at least one embodiment, cache memory may reside externally to a processor 402. Other embodiments may also include a combination of both internal and external caches depending on particular implementation and needs. In at least one embodiment, a register file 406 may store different types of data in various registers including, without limitation, integer registers, floating point registers, status registers, and an instruction pointer register.

In at least one embodiment, an execution unit 408, including, without limitation, logic to perform integer and floating point operations, also resides in a processor 402. In at least one embodiment, a processor 402 may also include a microcode ("ucode") read only memory ("ROM") that stores microcode for certain macro instructions. In at least one embodiment, an execution unit 408 may include logic to handle a packed instruction set 409.

In at least one embodiment, by including a packed instruction set 409 in an instruction set of a general-purpose processor, along with associated circuitry to execute instructions, operations used by many multimedia applications may be performed using packed data in a processor 402. In at least one embodiment, many multimedia applications may be accelerated and executed more efficiently by using a full width of a processor's data bus for performing operations on packed data, which may eliminate a need to transfer smaller units of data across that processor's data bus to perform one or more operations one data element at a time.

In at least one embodiment, an execution unit 408 may also be used in microcontrollers, embedded processors, graphics devices, DSPs, and other types of logic circuits. In at least one embodiment, the computer and processor aspects 400 may include, without limitation, a memory 420. In at least one embodiment, a memory 420 may be a Dynamic Random Access Memory ("DRAM") device, a Static Random Access Memory ("SRAM") device, a flash memory device, or another memory device. In at least one embodiment, a memory 420 may store instruction(s) 419 and/or data 421 represented by data signals that may be executed by a processor 402.

In at least one embodiment, a system logic chip may be coupled to a processor bus 410 and a memory 420. In at least one embodiment, a system logic chip may include, without limitation, a memory controller hub ("MCH") 416, and processors 402 may communicate with MCH 416 via processor bus 410. In at least one embodiment, an MCH 416 may provide a high bandwidth memory path 418 to a memory 420 for instruction and data storage and for storage of graphics commands, data, and textures. In at least one embodiment, an MCH 416 may direct data signals between a processor 402, a memory 420, and other components in the computer and processor aspects 400 and to bridge data signals between a processor bus 410, a memory 420, and a system I/O interface 422. In at least one embodiment, a system logic chip may provide a graphics port for coupling to a graphics controller. In at least one embodiment, an MCH 416 may be coupled to a memory 420 through a high bandwidth memory path 418 and a graphics/video card 412 may be coupled to an MCH 416 through an Accelerated Graphics Port ("AGP") interconnect 414. In at least one embodiment, the graphics/video card 412 may be coupled to one or more of the processors 402 via a PCIe interconnect standard. Similarly, a network controller 434 may also be coupled to one or more of the processors 402 via a PCIe interconnect standard.

In at least one embodiment, the computer and processor aspects 400 may use a system I/O interface 422 as a proprietary hub interface bus to couple an MCH 416 to an I/O controller hub ("ICH") 430. In at least one embodiment, an ICH 430 may provide direct connections to some I/O devices via a local I/O bus. In at least one embodiment, a local I/O bus may include, without limitation, a high-speed I/O bus for connecting peripherals to a memory 420, a chipset, and processors 402. Examples may include, without limitation, an audio controller 429, a firmware hub ("flash BIOS") 428, a wireless transceiver 426, a data storage 424, a legacy I/O controller 423 containing user input and keyboard interface(s) 425, a serial expansion port 427, such as a Universal Serial Bus ("USB") port, and a network controller 434. In at least one embodiment, data storage 424 may comprise a hard disk drive, a floppy disk drive, a CD-ROM device, a flash memory device, or other mass storage device.

In at least one embodiment, FIG. 4 illustrates computer and processor aspects 400, which includes interconnected hardware devices or "chips", whereas in other embodiments, FIG. 4 may illustrate an exemplary SoC. In at least one embodiment, devices illustrated in FIG. 4 may be interconnected with proprietary interconnects, standardized interconnects (e.g., PCIe) or some combination thereof. In at least one embodiment, one or more components of the computer and processor aspects 400 that are interconnected using compute express link (CXL) interconnects.

Therefore, at least one execution unit 408 may be a circuit of at least one processor 402 to be associated with the encoder 102 or inference sub-system 120. The association may be such that at least one execution unit 408 of at least one processor 402 can perform the encoder 102 or inference sub-system 120. The association may be such that at least one execution unit 408 of at least one processor 402 can load and run or execute instructions to perform the encoder 102 or inference sub-system 120. However, the association may be such that the at least one execution unit 408 of at least one processor 402 may be hardwired to perform the encoder 102 or inference sub-system 120.

In at least one embodiment, the at least one execution unit 408 may be associated with one or more circuits that are configured to infer a QM level from video or frame statistics within features of a media stream. The one or more circuits may also be configured to use the QM level to apply a QM from different video encoding modes for encoding the media stream. The one or more circuits may also be configured to adjust an ML or DL model of the inference sub-system or the QM level based in part on evaluation of the QM used with at least one frame of the media stream. This may be a finetuning provided for an ML or DL mode. The one or more circuits may also be configured to perform the evaluation based on VMAF, SSIM MS-SSIM, PSNR, or a weighted average or a rate reduction derived from VMAF, SSIM, MS-SSIM, PSNR, or other quality metrics described herein.

The one or more circuits may also be configured to allow individual training routines to be assigned for individual ones of different QMs available in the different video encoding modes. The one or more circuits may also be configured to include training for an individual one of different QMs available in the different video encoding modes. The one or more circuits may also be configured with supervised ML regression therein. The supervised ML regression may be used for performing the inference for individual frames of an input sequence of the media stream. The one or more circuits may also be configured to infer a QM level from video or frame statistics within features of a media stream. The QM level may be available to a video encoder to apply a QM. For instance, the QM level may be communicated to a video encoder and the video encoder may be configured to recognize the QM level to apply a QM from different video encoding modes in the video encoder. The QM may be used for encoding the media stream. In another example, the QM level may be provided as a QP or may be associated with a QP so that the video encoder may recognize the QM level to use a QM, to modify a QM, or to use an adjusted QM with the media stream.

The one or more circuits may also be configured to allow individual training routines to be assigned for individual ones of the QMs available in the different video encoding modes. The one or more circuits may also be configured to include training for an individual one of different QMs available in the different video encoding modes. The one or more circuits may also be configured to perform supervised ML regression. The supervised ML regression may be used to perform the inference for individual frames of the input sequence.

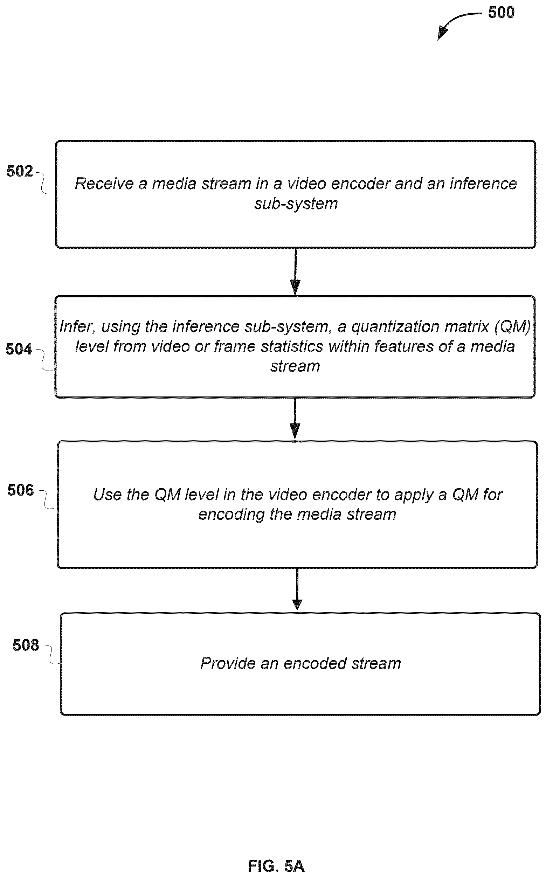

FIG. 5A illustrates a process flow or method 500 for using ML or DL with video or frame statistics for video encoding, in at least one embodiment. The method 500 may include a step to receive 502 a media stream in a video encoder and an inference sub-system. The method 500 may include a step to infer 504, using the inference sub-system, a QM level from video or frame statistics within features of a media stream. The method 500 may include a step to use 506 the QM level in the video encoder to apply a QM from the video encoder for encoding the media stream. The method 500 may include a step to provide 508 an encoded stream.

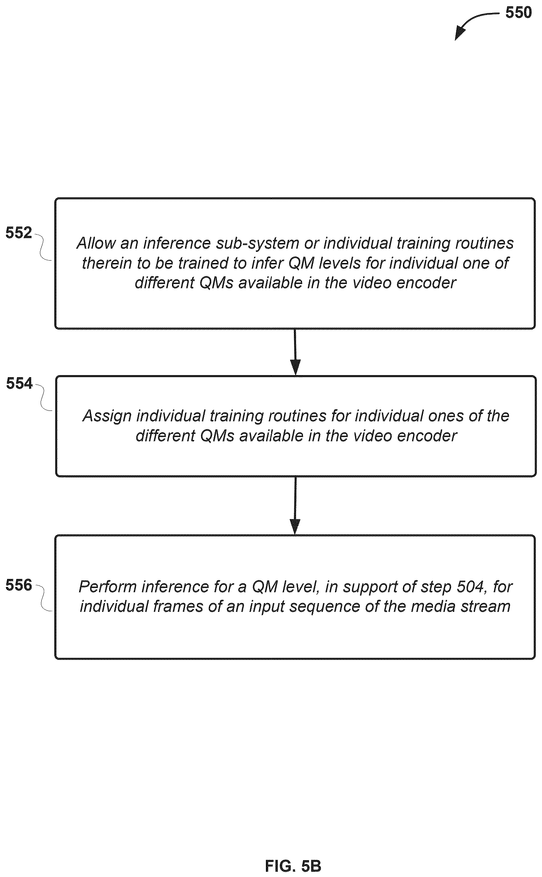

FIG. 5B illustrates another process flow or method 550 for using ML or DL with video or frame statistics for video encoding, in at least one embodiment. The method 550 in FIG. 5B may be used in conjunction with the method 500 of FIG. 5B, in at least one embodiment. The method 550 in FIG. 5B may include a step to allow 552 an inference sub-system or individual training routines therein to be trained to infer QM levels for individual ones of different QMs available in the video encoder. The method 500 may include a step to assign 554 individual training routines for individual ones of the different QMs available in the video encoder. The method 500 may include a step to perform 556 inference for a QM level, in support of step 504 of the method 500 in FIG. 5A. The inference performed 556 may be for individual frames of an input sequence of the media stream.

The method 550 may include a step or sub-step to perform training in the inference sub-system. The training may use supervised ML regression. The training may also use video or frame statistics from a media stream used in the step for inferring 504 a QM level. For instance, the training may include a portion of the video or frame statistics from a media stream subject to the inference 504 step. The method 550 may include a step or sub-step to perform the training using video or frame statistics from a collection of media streams which may include different media streams previously used with or intended to be used with the encoding system 100. The method 550 may include a step or sub-step to allow the inference for the QM level for individual frames of an input sequence of the media stream to be performed using the supervised ML regression.

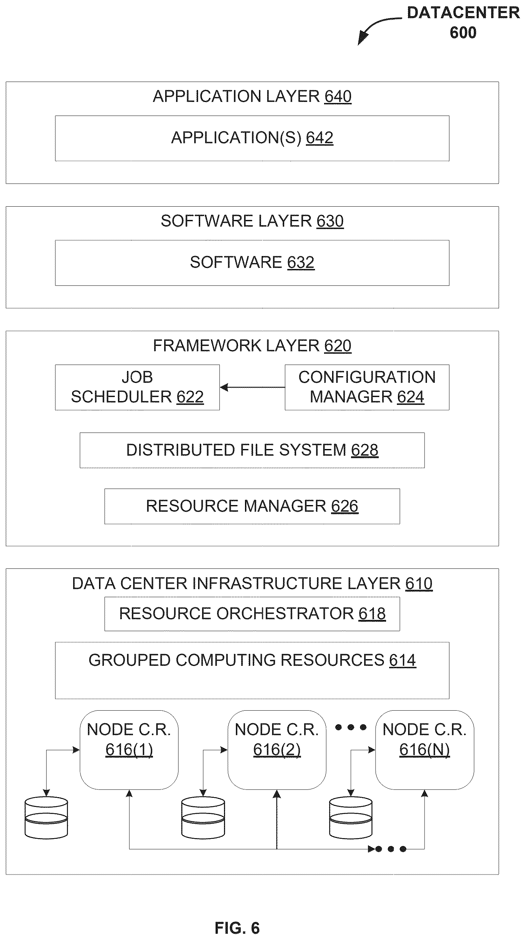

FIG. 6 illustrates a datacenter 600 adapted for using ML or DL with video or frame statistics for video encoding. The datacenter 600 may include one or more of the encoders or the inference sub-system to perform video encoding. For instance, the encoder or the inference sub-system may be distributed parts of video encoding available in the datacenter 600. In at least one embodiment, datacenter 600 includes a datacenter infrastructure layer 610, a framework layer 620, a software layer 630, and an application layer 640 to perform all or parts of the encoder or the inference sub-system to perform video encoding.

In at least one embodiment, the datacenter infrastructure layer 610, the framework layer 620, the software layer 630, and the application layer 640 may be partly or fully provided via computing components on server trays located in racks of the datacenter 600. This enables cooling systems of the present disclosure to direct cooling to certain ones of the computing features in an efficient and effective manner. Further, aspects of the datacenter, including the datacenter infrastructure layer 610, the framework layer 620, the software layer 630, and the application layer 640 may be used to support application and use of the encoder or the inference sub-system to perform video encoding, as discussed herein with at least reference to FIGS. 1-5B above. As such, the discussion in reference to FIG. 6 may be understood to apply to the hardware and software features required to enable or support the encoder or the inference sub-system to perform video encoding, for instance.

In at least one embodiment, as in FIG. 6, datacenter infrastructure layer 610 may include a resource orchestrator 612, grouped computing resources 614, and node computing resources ("node C.R.s") 616(1)-616(N), where "N" represents any whole, positive integer. In at least one embodiment, node C.R.s 616(1)-616(N) may include, but are not limited to, any number of central processing units ("CPUs") or other processors (including accelerators, field programmable gate arrays (FPGAs), graphics processors, etc.), memory devices (such as dynamic read-only memory), storage devices (such as solid state or disk drives), network input/output ("NW I/O") devices, network switches, virtual machines ("VMs"), power modules, and cooling modules, etc. In at least one embodiment, one or more node C.R.s from among node C.R.s 616(1)-616(N) may be a server having one or more of above-mentioned computing resources.

In at least one embodiment, grouped computing resources 614 may include separate groupings of node C.R.s housed within one or more racks (not shown), or many racks housed in datacenters at various geographical locations (also not shown). Separate groupings of node C.R.s within grouped computing resources 614 may include grouped compute, network, memory or storage resources that may be configured or allocated to support one or more workloads. In at least one embodiment, several node C.R.s including CPUs or processors may be grouped within one or more racks to provide compute resources to support one or more workloads. In at least one embodiment, one or more racks may also include any number of power modules, cooling modules, and network switches, in any combination.

In at least one embodiment, resource orchestrator 612 may configure or otherwise control one or more node C.R.s 616(1)-616(N) and/or grouped computing resources 614. In at least one embodiment, resource orchestrator 612 may include a software design infrastructure ("SDI") management entity for datacenter 600. In at least one embodiment, resource orchestrator may include hardware, software or some combination thereof.

In at least one embodiment, as shown in FIG. 6, framework layer 620 includes a job scheduler 622, a configuration manager 624, a resource manager 626 and a distributed file system 628. In at least one embodiment, framework layer 620 may include a framework to support software 632 of software layer 630 and/or one or more application(s) 642 of application layer 640. In at least one embodiment, software 632 or application(s) 642 may respectively include web-based service software or applications, such as those provided by Amazon Web Services, Google Cloud and Microsoft Azure. In at least one embodiment, framework layer 620 may be, but is not limited to, a type of free and open-source software web application framework such as Apache SparkTM (hereinafter "Spark") that may utilize distributed file system 628 for large-scale data processing (such as "big data"). In at least one embodiment, job scheduler 622 may include a Spark driver to facilitate scheduling of workloads supported by various layers of datacenter 600. In at least one embodiment, configuration manager 624 may be capable of configuring different layers such as software layer 630 and framework layer 620 including Spark and distributed file system 628 for supporting large-scale data processing. In at least one embodiment, resource manager 626 may be capable of managing clustered or grouped computing resources mapped to or allocated for support of distributed file system 628 and job scheduler 622. In at least one embodiment, clustered or grouped computing resources may include grouped computing resources 614 at datacenter infrastructure layer 610. In at least one embodiment, resource manager 626 may coordinate with resource orchestrator 612 to manage these mapped or allocated computing resources.

In at least one embodiment, software 632 included in software layer 630 may include software used by at least portions of node C.R.s 616(1)-616(N), grouped computing resources 614, and/or distributed file system 628 of framework layer 620. One or more types of software may include, but are not limited to, Internet web page search software, e-mail virus scan software, database software, and streaming video content software.

In at least one embodiment, application(s) 642 included in application layer 640 may include one or more types of applications used by at least portions of node C.R.s 616(1)-616(N), grouped computing resources 614, and/or distributed file system 628 of framework layer 620. One or more types of applications may include, but are not limited to, any number of a genomics application, a cognitive compute, and a machine learning application, including training or inferencing software, machine learning framework software (such as PyTorch, TensorFlow, Caffe, etc.) or other machine learning applications used in conjunction with one or more embodiments.

In at least one embodiment, any of a configuration manager 624, a resource manager 626, and a resource orchestrator 612 may implement any number and type of self-modifying actions based on any amount and type of data acquired in any technically feasible fashion. In at least one embodiment, self-modifying actions may relieve a datacenter operator of datacenter 600 from making possibly bad configuration decisions and possibly avoiding underutilized and/or poor performing portions of a datacenter.

In at least one embodiment, datacenter 600 may include tools, services, software or other resources to train one or more machine learning or deep learning models or predict or infer information using one or more machine learning or deep learning models according to one or more embodiments described herein. In at least one embodiment, in at least one embodiment, a machine learning or deep learning model may be trained by calculating weight parameters according to a neural network architecture using software and computing resources described above with respect to datacenter 600. In at least one embodiment, trained machine learning or deep learning models corresponding to one or more neural networks may be used to infer or predict information using resources described above with respect to datacenter 600 by using weight parameters calculated through one or more training techniques described herein. Deep learning may be advanced using any appropriate learning network and the computing capabilities of the datacenter 600. As such, a deep neural network (DNN), a recurrent neural network (RNN) or a convolutional neural network (CNN) may be supported either simultaneously or concurrently using the hardware in the datacenter. Once a network is trained and successfully evaluated to recognize data within a subset or a slice, for instance, the trained network can provide similar representative data for using with the collected data.

In at least one embodiment, datacenter 600 may use CPUs, application-specific integrated circuits (ASICs), GPUs, DPUs, QPUs, PPUs, FPGAs, or other hardware to perform training and/or inferencing using above-described resources. QPUs configured to perform one or more operations associated with a quantum algorithm. In examples, each of the one or more QPUs may include a plurality of qubits and the one or more QPUs may be in communication with each other via a quantum channel. In examples, each of the plurality of qubits may include local qubits, global qubits, and/or synchronization qubits. In examples, the local qubits of each QPU may be configured to perform the one or more operations associated with the quantum algorithm on the QPU that the local qubits are associated with. Moreover, one or more software and/or hardware resources described above may be configured as a service to allow users to train or perform inferencing of information, such as pressure, flow rates, temperature, and location information, or other artificial intelligence services.

Inference and/or training logic 615 may be used to perform inferencing and/or training operations associated with one or more embodiments. In at least one embodiment, inference and/or training logic 615 may be used in system FIG. 6 for inferencing or predicting operations based, at least in part, on weight parameters calculated using neural network training operations, neural network functions and/or architectures, or neural network use cases described herein. In at least one embodiment, inference and/or training logic 615 may include, without limitation, hardware logic in which computational resources are dedicated or otherwise exclusively used in conjunction with weight values or other information corresponding to one or more layers of neurons within a neural network. In at least one embodiment, inference and/or training logic 615 may be used in conjunction with an application-specific integrated circuit (ASIC), such as Tensorflow^{®} Processing Unit from Google, an inference processing unit (IPU) from Graphcore^{™}, or a Nervana^{®} (such as "Lake Crest") processor from Intel Corp.

In at least one embodiment, inference and/or training logic 615 may be used in conjunction with central processing unit (CPU) hardware, graphics processing unit (GPU) hardware or other hardware, such as field programmable gate arrays (FPGAs). In at least one embodiment, inference and/or training logic 615 includes, without limitation, code and/or data storage modules which may be used to store code (such as graph code), weight values and/or other information, including bias values, gradient information, momentum values, and/or other parameter or hyperparameter information. In at least one embodiment, each of the code and/or data storage modules is associated with a dedicated computational resource. In at least one embodiment, the dedicated computational resource includes computational hardware that further includes one or more ALUs that perform mathematical functions, such as linear algebraic functions, only on information stored in code and/or data storage modules, and results from which are stored in an activation storage module of the inference and/or training logic 615.

In the following description, numerous specific details are set forth to provide a more thorough understanding of at least one embodiment. However, it will be apparent to one skilled in the art that the inventive concepts may be practiced without one or more of these specific details.

Other variations are within spirit of present disclosure. Thus, while disclosed techniques are susceptible to various modifications and alternative constructions, certain illustrated embodiments thereof are shown in drawings and have been described above in detail. It should be understood, however, that there is no intention to limit disclosure to specific form or forms disclosed, but on contrary, intention is to cover all modifications, alternative constructions, and equivalents falling within spirit and scope of disclosure, as defined in appended claims.

Use of terms "a" and "an" and "the" and similar referents in context of describing disclosed embodiments (especially in context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. "Connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within range, unless otherwise indicated herein and each separate value is incorporated into specification as if it were individually recited herein. In at least one embodiment, use of term "set" (e.g., "a set of items") or "subset" unless otherwise noted or contradicted by context, is to be construed as a nonempty collection comprising one or more members. Further, unless otherwise noted or contradicted by context, term "subset" of a corresponding set does not necessarily denote a proper subset of corresponding set, but subset and corresponding set may be equal.

Conjunctive language, such as phrases of form "at least one of A, B, and C," or "at least one of A, B and C," unless specifically stated otherwise or otherwise clearly contradicted by context, is otherwise understood with context as used in general to present that an item, term, etc., may be either A or B or C, or any nonempty subset of set of A and B and C. For instance, in illustrative example of a set having three members, conjunctive phrases "at least one of A, B, and C" and "at least one of A, B and C" refer to any of following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present. In addition, unless otherwise noted or contradicted by context, term "plurality" indicates a state of being plural (e.g., "a plurality of items" indicates multiple items). In at least one embodiment, number of items in a plurality is at least two, but can be more when so indicated either explicitly or by context. Further, unless stated otherwise or otherwise clear from context, phrase "based on" means "based at least in part on" and not "based solely on."

Operations of processes described herein can be performed in any suitable order unless otherwise indicated herein or otherwise clearly contradicted by context. In at least one embodiment, a process such as those processes described herein (or variations and/or combinations thereof) is performed under control of one or more computer systems configured with executable instructions and is implemented as code (e.g., executable instructions, one or more computer programs or one or more applications) executing collectively on one or more processors, by hardware or combinations thereof. In at least one embodiment, code is stored on a computer-readable storage medium, for example, in form of a computer program comprising a plurality of instructions executable by one or more processors.

In at least one embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In at least one embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. In at least one embodiment, set of non-transitory computer-readable storage media comprises multiple non-transitory computer-readable storage media and one or more of individual non-transitory storage media of multiple non-transitory computer-readable storage media lack all of code while multiple non-transitory computer-readable storage media collectively store all of code. In at least one embodiment, executable instructions are executed such that different instructions are executed by different processors - for example, a non-transitory computer-readable storage medium store instructions and a main central processing unit ("CPU") executes some of instructions while a graphics processing unit ("GPU") executes other instructions. In at least one embodiment, different components of a computer system have separate processors and different processors execute different subsets of instructions.

In at least one embodiment, an arithmetic logic unit is a set of combinational logic circuitry that takes one or more inputs to produce a result. In at least one embodiment, an arithmetic logic unit is used by a processor to implement mathematical operation such as addition, subtraction, or multiplication. In at least one embodiment, an arithmetic logic unit is used to implement logical operations such as logical AND/OR or XOR. In at least one embodiment, an arithmetic logic unit is stateless, and made from physical switching components such as semiconductor transistors arranged to form logical gates. In at least one embodiment, an arithmetic logic unit may operate internally as a stateful logic circuit with an associated clock. In at least one embodiment, an arithmetic logic unit may be constructed as an asynchronous logic circuit with an internal state not maintained in an associated register set. In at least one embodiment, an arithmetic logic unit is used by a processor to combine operands stored in one or more registers of the processor and produce an output that can be stored by the processor in another register or a memory location.

In at least one embodiment, as a result of processing an instruction retrieved by the processor, the processor presents one or more inputs or operands to an arithmetic logic unit, causing the arithmetic logic unit to produce a result based at least in part on an instruction code provided to inputs of the arithmetic logic unit. In at least one embodiment, the instruction codes provided by the processor to the ALU are based at least in part on the instruction executed by the processor. In at least one embodiment combinational logic in the ALU processes the inputs and produces an output which is placed on a bus within the processor. In at least one embodiment, the processor selects a destination register, memory location, output device, or output storage location on the output bus so that clocking the processor causes the results produced by the ALU to be sent to the desired location.

Accordingly, in at least one embodiment, computer systems are configured to implement one or more services that singly or collectively perform operations of processes described herein and such computer systems are configured with applicable hardware and/or software that allow performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or exemplary language (e.g., "such as") provided herein, is intended merely to better illuminate embodiments of disclosure and does not pose a limitation on scope of disclosure unless otherwise claimed. No language in specification should be construed as indicating any non-claimed element as essential to practice of disclosure.

In description and claims, terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout specification terms such as "processing," "computing," "calculating," "determining," or like, refer to action and/or processes of a computer or computing system, or similar electronic computing device, that manipulate and/or transform data represented as physical, such as electronic, quantities within computing system's registers and/or memories into other data similarly represented as physical quantities within computing system's memories, registers or other such information storage, transmission or display devices.

In a similar manner, term "processor" may refer to any device or portion of a device that processes electronic data from registers and/or memory and transform that electronic data into other electronic data that may be stored in registers and/or memory. As non-limiting examples, "processor" may be a CPU or a GPU. A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. In at least one embodiment, terms "system" and "method" are used herein interchangeably insofar as system may embody one or more methods and methods may be considered a system.

In present document, references may be made to obtaining, acquiring, receiving, or inputting analog or digital data into a subsystem, computer system, or computer-implemented machine. In at least one embodiment, process of obtaining, acquiring, receiving, or inputting analog and digital data can be accomplished in a variety of ways such as by receiving data as a parameter of a function call or a call to an application programming interface. In at least one embodiment, processes of obtaining, acquiring, receiving, or inputting analog or digital data can be accomplished by transferring data via a serial or parallel interface. In at least one embodiment, processes of obtaining, acquiring, receiving, or inputting analog or digital data can be accomplished by transferring data via a computer network from a providing entity to an acquiring entity. References may also be made to providing, outputting, transmitting, sending, or presenting analog or digital data. In at least one embodiment, processes of providing, outputting, transmitting, sending, or presenting analog or digital data can be accomplished by transferring data as an input or output parameter of a function call, a parameter of an application programming interface or interprocess communication mechanism.

Although descriptions herein set forth example implementations of described techniques, other architectures may be used to implement described functionality, and are intended to be within scope of this disclosure. Furthermore, although specific distributions of responsibilities may be defined above for purposes of description, various functions and responsibilities might be distributed and divided in different ways, depending on circumstances.

Furthermore, although subject matter has been described in language specific to structural features and/or methodological acts, it is to be understood that subject matter claimed in appended claims is not necessarily limited to specific features or acts described. Rather, specific features and acts are disclosed as exemplary forms of implementing the claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:
Clause 1. An encoding system comprising a video encoder and an inference sub-system, the inference sub-system to infer a quantization matrix (QM) level from video or frame statistics within features of a media stream, and the video encoder to use the QM level to apply a QM from the video encoder for encoding the media stream.
Clause 2. The encoding system of clause 1, wherein the video or frame statistics comprise one or more of statistical distribution measures, spatial frequency or rates, or texture statistics.
Clause 3. The encoding system of clause 1, wherein the features comprise one or more of motion characteristics, spatial and temporal complexity, noise patterns, content-based features, content metadata, genre of the media stream, data associated with sources of the media stream, user-specified preferences, frame rates, frame resolution, bitrates, or quality levels.
Clause 4. The encoding system of clause 1, wherein a Machine Learning (ML) or a Deep Learning (DL) model of the inference sub-system or the QM level is adjusted based in part on evaluation of the QM used with at least one frame of the media stream, and wherein the evaluation is based on VMAF (Video Multi-Method Assessment Fusion), SSIM (Structural Similarity Index), Multiscale SSIM (MS-SSIM), PSNR (Peak Signal-to-Noise Ratio), or weighted average or rate reduction derived from at least VMAF, SSIM, MS-SSIM, or PSNR.
Clause 5. The encoding system of clause 1, wherein the features are extracted from an input sequence of the media stream, wherein the input sequence is buffered over different levels associated with the features, and wherein the inference sub-system is configured for different supervised learning using the video or frame statistics associated with the different levels associated with the features and with individual ones of a plurality of QMs of the video encoder.
Clause 6. The encoding system of clause 1, wherein the inference sub-system is configured with individual training routines assigned for individual ones of a plurality of QMs available in the video encoder.
Clause 7. The encoding system of clause 1, wherein the inference sub-system is trained to infer individual QM levels for individual ones of a plurality of QMs available in the video encoder.
Clause 8. The encoding system of clause 1, wherein the inference sub-system comprises supervised machine learning (ML) regression or ML classification, and wherein at least the supervised ML regression is used for performing the inference for the QM level for individual frames of an input sequence of the media stream.
Clause 9. One or more circuits configured to infer a quantization matrix (QM) level from video or frame statistics within features of a media stream and configured to use the QM level to apply a QM, from different video encoding modes, for encoding the media stream.
Clause 10. The one or more circuits of clause 9, further configured to adjust an ML or DL model of an inference sub-system or to adjust the QM level, the adjustment based in part on evaluation of the QM used with at least one frame of the media stream, and wherein the evaluation is based on VMAF (Video Multi-Method Assessment Fusion), SSIM (Structural Similarity Index), Multiscale SSIM (MS-SSIM), PSNR (Peak Signal-to-Noise Ratio) or weighted average or rate reduction derived from at least VMAF, SSIM, MS-SSIM, or PSNR.
Clause 11. The one or more circuits of clause 9, further configured to allow individual training routines to be assigned for individual ones of a plurality of QMs available in the different video encoding modes.
Clause 12. The one or more circuits of clause 9, further configured to comprise training for an individual one of a plurality of QMs available in the different video encoding modes.
Clause 13. The one or more circuits of clause 9, further configured to comprise supervised machine learning (ML) regression or ML classification, wherein at least the supervised ML regression is used for performing the inference for individual frames of an input sequence of the media stream.
Clause 14. One or more circuits configured to infer a quantization matrix (QM) level from video or frame statistics within features of a media stream, wherein the QM level is available to a video encoder to apply a QM, from different video encoding modes in the video encoder, for encoding the media stream.
Clause 15. The one or more circuits of clause 14, further configured to allow individual training routines to be assigned for individual ones of a plurality of QMs available in the different video encoding modes.
Clause 16. The one or more circuits of clause 14, further configured to comprise training for an individual one of a plurality of QMs available in the different video encoding modes.
Clause 17. The one or more circuits of clause 14, further configured to perform supervised machine learning (ML) regression or ML classification, wherein at least the supervised ML regression is used to perform the inference for individual frames of an input sequence.
Clause 18. A method for video encoding, the method comprising:
   receiving a media stream in a video encoder and an inference sub-system;
   inferring, using the inference sub-system, a quantization matrix (QM) level from video or frame statistics within features of a media stream; and
   using the QM level in the video encoder to apply a QM for encoding the media stream.
Clause 19. The method of clause 18, further comprising:
   assigning, in the inference sub-system, individual training routines for individual ones of a plurality of QMs available in the video encoder, wherein the inference sub-system or the individual training routines are trained to infer QM levels for individual one of a plurality of QMs available in the video encoder.
Clause 20. The method of clause 18, further comprising:
   performing training, in the inference sub-system, using supervised machine learning (ML) regression and using the video or frame statistics from the media stream or using further video or frame statistics from a collection of media streams; and
   allowing, using the supervised ML regression, the inference for the QM level for individual frames of an input sequence of the media stream.

## Claims

1. An encoding system comprising a video encoder and an inference sub-system, the inference sub-system to infer a quantization matrix (QM) level from video or frame statistics within features of a media stream, and the video encoder to use the QM level to apply a QM from the video encoder for encoding the media stream.

2. The encoding system of claim 1, wherein the video or frame statistics comprise one or more of statistical distribution measures, spatial frequency or rates, or texture statistics.

3. The encoding system of claim 1 or 2, wherein the features comprise one or more of motion characteristics, spatial and temporal complexity, noise patterns, content-based features, content metadata, genre of the media stream, data associated with sources of the media stream, user-specified preferences, frame rates, frame resolution, bitrates, or quality levels.

4. The encoding system of claim 1, 2, or 3, wherein a Machine Learning (ML) or a Deep Learning (DL) model of the inference sub-system or the QM level is adjusted based in part on evaluation of the QM used with at least one frame of the media stream, and wherein the evaluation is based on VMAF (Video Multi-Method Assessment Fusion), SSIM (Structural Similarity Index), Multiscale SSIM (MS-SSIM), PSNR (Peak Signal-to-Noise Ratio), or weighted average or rate reduction derived from at least VMAF, SSIM, MS-SSIM, or PSNR.

5. The encoding system of any preceding claim, wherein the features are extracted from an input sequence of the media stream, wherein the input sequence is buffered over different levels associated with the features, and wherein the inference sub-system is configured for different supervised learning using the video or frame statistics associated with the different levels associated with the features and with individual ones of a plurality of QMs of the video encoder.

6. The encoding system of any preceding claim, wherein the inference sub-system is configured with individual training routines assigned for individual ones of a plurality of QMs available in the video encoder.

7. The encoding system of any preceding claim, wherein the inference sub-system is trained to infer individual QM levels for individual ones of a plurality of QMs available in the video encoder.

8. The encoding system of any preceding claim, wherein the inference sub-system comprises supervised machine learning (ML) regression or ML classification, and wherein at least the supervised ML regression is used for performing the inference for the QM level for individual frames of an input sequence of the media stream.

9. One or more circuits configured to infer a quantization matrix (QM) level from video or frame statistics within features of a media stream and configured to use the QM level to apply a QM, from different video encoding modes, for encoding the media stream.

10. The one or more circuits of claim 9, further configured to comprise training for an individual one of a plurality of QMs available in the different video encoding modes.

11. One or more circuits configured to infer a quantization matrix (QM) level from video or frame statistics within features of a media stream, wherein the QM level is available to a video encoder to apply a QM, from different video encoding modes in the video encoder, for encoding the media stream.

12. The one or more circuits of claim 11, further configured to comprise training for an individual one of a plurality of QMs available in the different video encoding modes.

13. A method for video encoding, the method comprising:
receiving a media stream in a video encoder and an inference sub-system;
inferring, using the inference sub-system, a quantization matrix (QM) level from video or frame statistics within features of a media stream; and
using the QM level in the video encoder to apply a QM for encoding the media stream.

14. The method of claim 13, further comprising:
assigning, in the inference sub-system, individual training routines for individual ones of a plurality of QMs available in the video encoder, wherein the inference sub-system or the individual training routines are trained to infer QM levels for individual one of a plurality of QMs available in the video encoder.

15. The method of claim 13 or 14, further comprising:
performing training, in the inference sub-system, using supervised machine learning (ML) regression and using the video or frame statistics from the media stream or using further video or frame statistics from a collection of media streams; and
allowing, using the supervised ML regression, the inference for the QM level for individual frames of an input sequence of the media stream.
